Europäisches Patentamt

European Patent Office

Office européen des brevets

(19)

(11) Veröffentlichungsnummer: **0 075 127**
**A2**

(12) **EUROPÄISCHE PATENTANMELDUNG**

(21) Anmeldenummer: **82107794.8**

(22) Anmeldetag: **25.08.82**

(51) Int. Cl.³: **G 05 D 16/08**

(30) Priorität: **17.09.81 DE 3137005**

(43) Veröffentlichungstag der Anmeldung: **30.03.83**
Patentblatt **83/13**

(84) Benannte Vertragsstaaten: **AT CH DE FR IT LI**

(71) Anmelder: **Hans Sasserath & Co KG,**
**Mühlenstrasse 100 Postfach 67/34,**
**D-4052 Korschenbroich 1 (DE)**

(72) Erfinder: **Sasserath, Arend, Dahlener Strasse 693,**
**D-4050 Mönchengladbach 2 (DE)**
Erfinder: **Hecking, Willi, Andreasstrasse 21,**
**D-4050 Mönchengladbach 2 (DE)**

(74) Vertreter: **Wolgast, Rudolf, Dipl.-Chem. Dr. et al,**
**Dipl.-Phys. Jürgen Weisse Dipl.Chem. Dr. Rudolf Wolgast**
**Bökenbusch 41 Postfach 11 03 86,**
**D-5620 Velbert 11 Langenberg (DE)**

(54) Druckmindererventil mit auswechselbarem Ventileinsatz.

(57) Bei einem Druckmindererventil mit einem in den seitlichen Ansatz eines Rohrstutzens einschraubbaren Federgehäuse und mit einem Einsatz, der u.a. den Ventilsatz und den Ventilkörper enthält und als einheitliches Bauteil aus dem Rohrstutzen ausbaubar ist, ist eine Membran mit ihrem Rand zwischen das Federgehäuse und den Einsatz eingespannt und am Ventilkörper befestigt. Das Federgehäuse enthält eine zu dem Ventilkörper ausgerichtete Gewindespindel und einen axial entlang der Gewindespindel verschiebbaren Federteller, an dem sich eine die Membran einstellbar belastende Spannfeder abstützt. Die Spannfeder liegt membranseitig einem Federteller mit einem rohrförmigen Axialteil an, der eine Verlängerung des Ventilkörpers umgibt und an einem diesem zugekehrten Ansatz der Gewindespindel geführt ist. Der Axialteil ist leicht lösbar durch eine Federklammer an einem eine Hinterschneidung aufweisenden Fortsatz der Verlängerung befestigt. Das Federgehäuse und der Einsatz sind dadurch gemeinsam aus dem Rohrstutzen ausbaubar.

Patentanmeldung

Hans Sasserath & Co KG,Mühlenstraße 100,4052 Korschenbroich

## Druckmindererventil mit auswechselbarem Ventileinsatz

Die Erfindung betrifft ein Druckmindererventil zum Einbau in Wasserleitungen, bestehend aus einem Rohrstück mit Einlaß- und Auslaßstutzen, mit einer Aufnahme für einen Ventilsitz und mit einem seitlichen Ansatz, aus einem in den seitlichen Ansatz abdichtend eingesetzten, auswechselbaren Einsatz, der ein einheitliches Bauteil mit einem Ventilsitz, mit einem in einer zu dem Ventilsitz ausgerichteten Führung abdichtend geführten Ventilkörper, mit einer Membran, die an dem dem Ventilsitz abgewandten Ende mit dem Ventilkörper verbunden ist, mit einer über die Membran hinausragenden Verlängerung des Ventilkörpers und mit dem Ventilkörper und dem Ventilsitz zugeordneten Sieben bildet, aus einem in den seitlichen Ansatz eingeschraubten Federgehäuse mit einer zu der Verlängerung ausgerichteten und in einem den Regulierhub bestimmenden Abstand davon endenden Gewindespindel, mit einer am freien Ende des Federgehäuses und der Gewindespindel lösbar befestigten Abdeckkappe und mit einem längs der Gewindespindel verschiebbaren ersten Federteller, und aus einer zwischen dem ersten Federteller und der Membran wirksamen Spannfeder.

Bei einem bekannten Druckmindererventil dieser Art (Typ 315 der Anmelderin) liegt die Spannfeder der Membran über eine Stützplatte an. Wenn das Druckmindererventil bei Störungen oder zu Wartungs- und Reparaturzwecken untersucht werden soll, wird zunächst das Federgehäuse mit der Abdeckkappe, der Gewindespindel und dem ersten Federteller durch Ausschrauben aus dem seitlichen Ansatz entfernt. Nach Abnahme der Spannfeder kann der Einsatz mit Hilfe von Werkzeugen durch Angriff unter der Stützplatte als Ganzes herausgehoben und geprüft bzw. gewartet oder repariert werden. Es hat sich in der Praxis jedoch herausgestellt, daß dieser Ausbau je nach dem Einbauort des Druckmindererventils nicht immer einfach zu bewerkstelligen ist, insbesondere, weil nach längeren Betriebszeiten der Dichtungsring, der Eingang und Ausgang des Druckmindererventils gegeneinander abdichtet, in der Aufnahme für den Ventilsitz ziemlich fest haftet. Außerdem wird es bei dem bekannten Druckmindererventil notwendig, nach dem erneuten Zusammenbau von neuem auf den jeweils gewünschten Ausgangsdruck zu justieren, da diese Justierung beim Ausbau aufgehoben wird. Das ist aber zeitaufwendig und auch nicht immer möglich, wenn z.B. der Eingangsdruck zu bestimmten Tageszeiten unter dem Ausgangsdruck liegt, auf den das Druckmindererventil eingestellt werden soll.

Die Aufgabe der Erfindung besteht darin, ein Druckmindererventil der eingangs genannten Art zu schaffen, bei dem der auswechselbare Einsatz ohne besondere Maßnahmen und ohne die Notwendigkeit zu einer Neujustierung des Druckmindererventils auf den jeweils gewünschten Ausgangsdruck ausgebaut werden kann.

Erfindungsgemäß wird diese Aufgabe dadurch gelöst, daß zwischen der Membran und der Spannfeder ein die Verlängerung die Gewindespindel lösbar verbindender zweiter Federteller angeordnet ist.

Bei dem erfindungsgemäßen Druckmindererventil wird beim Ausschrauben des Federgehäuses der auswechselbare Einsatz mitgenommen, ohne daß dabei die Justierung auf den jeweils gewünschten Ausgangsdruck verloren geht. Die Gewindespindel und die Verlängerung des Ventilkörpers sind lösbar miteinander verbunden und daher nach dem Ausbau leicht und unter Erhalt ihrer gegenseitigen Justierung voneinander zu trennen. Der Einsatz kann dann in üblicher Weise geprüft bzw. gewartet oder repariert werden.

Vorteilhafterweise weist bei dem erfindungsgemäßen Druckmindererventil die Verlängerung einen mit einer Hinterschneidung versehenen Fortsatz und die Gewindespindel an der dem Fortsatz zugekehrten Stirnseite eine an den Fortsatz angepaßte und durch den Regulierhub bestimmte Ausnehmung auf, und der zweite Federteller ist durch eine den Axialteil durchsetzende und an dem Fortsatz angreifende Federklammer an dem Fortsatz lösbar gehalten.

Dadurch wird die Trennung und Wiederverbindung des Einsatzes mit der Gewindespindel besonders einfach, denn durch Kippen des Einsatzes gegenüber der Gewindespindel wird die Federklammer über die Hinterschneidung an dem Fortsatz gedrückt und damit der Einsatz von dem zweiten Federteller gelöst.

Weitere vorteilhafte Ausgestaltungen der Erfindung sind in Unteransprüchen gekennzeichnet.

Ein Ausführungsbeispiel der Erfindung ist in den Abbildungen dargestellt und wird nachfolgend anhand der Bezugszeichen im einzelnen erläutert und beschrieben. Es zeigen

4

0075127

Fig. 1    einen Längsschnitt durch das Druckmindererventil nach der Erfindung und

Fig. 2    eine Ansicht der Halterung für den zweiten
          Federteller in dem Druckmindererventil nach
          Fig. 1.

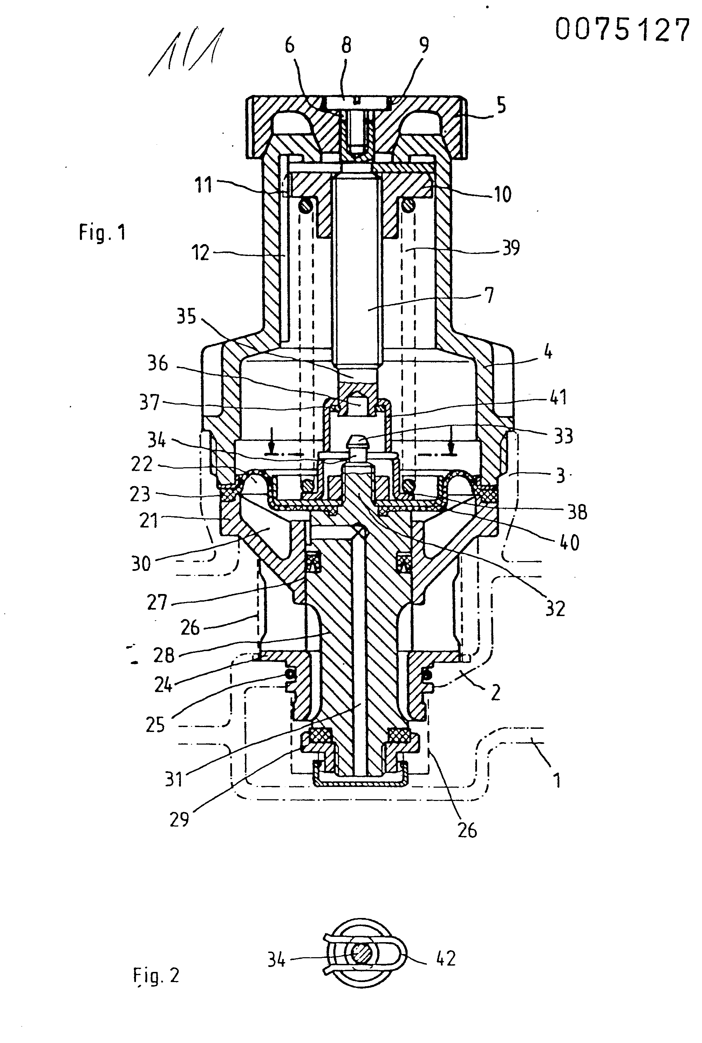

In Fig. 1 ist aus Gründen der Vereinfachung das Rohrstück 1
ohne den Einlaß- und Auslaßstutzen gezeigt; eine Aufnahme 2
für einen Ventilsitz und der seitliche Ansatz 3 sind nur
angedeutet dargestellt. In den seitlichen Ansatz 3 ist ein
längliches Federgehäuse 4 eingeschraubt. An seinem freien
Ende ist das Federgehäuse 4 durch eine Abdeckkappe 5 abgeschlossen, die an kegelförmigen Führungsflächen zentriert
ist und in einer Mittelöffnung 6 mit einer Gewindespindel 7 fest verbunden ist. Eine Feststellschraube 8 greift
in eine Gewindebohrung am freien Ende der Gewindespindel 7
und in eine Ausnehmung 9 an der Außenseite der Abdeckkappe 5
und dient zur Sicherung der Abdeckkappe 5 gegen unbeabsichtigte Verstellungen der Gewindespindel 7. Die Gewindespindel 7 ist zu der Aufnahme 2 für den Ventilsitz ausgerichtet
und trägt einen ersten Federteller 10, der mit einer Nase 11
an einer Führung 12 im Inneren des Federgehäuses 4 axial
und verdrehungssicher geführt ist.

Das Druckmindererventil enthält einen auswechselbaren,
becherförmigen Einsatz 21, dessen Rand auf die Stirnseite
des Federgehäuses 4 stößt. Zwischen den Rand des Einsatzes 21 und die Stirnseite des Federgehäuses 4 ist eine
Membran 22 mit einem verstärkten Rand 23 eingespannt.
Der Einsatz 21 verjüngt sich zum Inneren des Rohrstutzens 1
hin; an seinem inneren Ende ist ein Ventilsitz 24 ausgebildet, der mit einem Dichtungsring 25 abdichtend in die
Aufnahme 2 eingesetzt ist. An dem Ventilsitz 24 sind eingangsseitig und ausgangsseitig Siebe 26 angeordnet.

Der Einsatz 21 enthält ferner zwischen der Membran 22 und dem Ventilsitz 24 eine zu dem Ventilsitz 24 ausgerichtete Führung 27 und einen Ventilkörper 28, der in der Führung 27 abdichtend geführt ist. Der Ventilkörper 28 erstreckt sich durch den Ventilsitz 24 hindurch und ist an diesem Ende mit einem Schließkörper 29 versehen, der mit dem Ventilsitz 24 zusammenwirkt. Am anderen Ende des Ventilkörpers 28 ist die Membran 22 befestigt. Der in dem Einsatz 21 ausgebildete Druckentlastungsraum 30 ist durch einen Innenkanal 31 in dem Ventilkörper 28 an die Ausgangsseite des Druckmindererventils angeschlossen.

Der Ventilkörper 28 ist mit einer die Membran 22 durchsetzenden Verlängerung 32 versehen. Die Verlängerung 32 verläuft koaxial zu dem Ventilkörper 28 und zu der Gewindespindel 7 und trägt an ihrem freien Ende einen Fortsatz 33 mit einer Hinterschneidung 34. Die Gewindespindel 7 trägt an dem dem Fortsatz 33 zugekehrten Ende einen gewindefreien Ansatz 35, der an seiner Stirnseite mit einer an den Fortsatz 33 angepaßten Ausnehmung 36 versehen ist, und einen Anschlagring 37. Ein zweiter Federteller 38 liegt unter der Wirkung einer durch das Federgehäuse 4 verlaufenden und an dem ersten Federteller 10 abgestützten Spannfeder 39 einer Stützplatte 40 für die Membran 22 an. Der zweite Federteller 38 ist mit einem rohrförmigen Axialteil 41 versehen, dessen der Membran 22 abgewandtes Ende über den Anschlagring 37 greift und so umgebogen ist, daß dieses Ende an dem Ansatz 35 der Gewindespindel 7 geführt ist. Im Bereich einer Einschnürung erstreckt sich eine Federklammer 42 (siehe Fig.2) durch den Axialteil 41 und liegt dem Fortsatz 33 an der Hinterschneidung 34 an, so daß die Gewindespindel 7 und der Ventilkörper 28 durch die Federklammer 42 leicht lösbar miteinander verbunden sind.

Der Regulierhub des vorstehend beschriebenen Druckmindererventils wird durch den Anschlag des Fortsatzes 33 des Ventilkörpers 28 am Rand der Ausnehmung 36 in der Stirnseite der Gewindespindel 7 begrenzt. Der zweite Federteller 38 kann durch seine Verbindung mit dem Fortsatz 33 mittels der Federklammer 42 und durch die Führung seines Axialteils 41 an dem Ansatz 35 der Gewindespindel 7 diesem Regulierhub ungehindert folgen, ohne daß die Gefahr besteht, daß sich beim Regelspiel die durch den zweiten Federteller 38 bewirkte Verbindung zwischen der Gewindespindel 7 und dem Ventilkörper 28 löst. Diese Verbindung bleibt auch beim Ausbau des Einsatzes 21 aus dem Druckmindererventil erhalten und bewirkt dadurch, daß dieser nicht gesondert ausgebaut werden muß. Zum Ausbau wird das Federgehäuse 4 aus dem seitlichen Ansatz 3 ausgeschraubt. Der Einsatz 21 folgt dieser Bewegung durch den Angriff der Federklammer 42 an der Hinterschneidung 34 des Fortsatzes 33, wobei sich auch nach längeren Betriebszeiten der Ventilsitz 24 ohne weiteres aus der Aufnahme 2 löst. Nach Ausbau des Federgehäuses 4 mit dem Einsatz 21 aus dem Rohrstutzen 1 läßt sich der Einsatz 21 dadurch auf einfache Weise von dem Federgehäuse 4 trennen, daß die beiden Teile gegeneinander gekippt werden. Dabei wird die Federklammer 42 zunehmend gespreizt und gelangt schließlich über die Hinterschneidung 34, so daß sich mit dem Federgehäuse 4 die Gewindespindel 7 mit den beiden Federtellern 10,38 von der Stützplatte 40 der Membran 22 abnehmen läßt. Der Einsatz 21 ist dann frei zur Untersuchung bzw. Wartung oder Reparatur. In entsprechender Weise erfolgt der Wiederzusammenbau des Federgehäuses 4 und des Einsatzes 21.Die Justierung der Spannfeder 39 ändert sich dabei nicht, so daß nach dem erneuten Zusammenbau der Teile keine Neujustierung auf den jeweils gewünschten Ausgangsdruck durchgeführt werden muß.

Patentansprüche

1. Druckmindererventil zum Einbau in Wasserleitungen, bestehend aus einem Rohrstück mit Einlaß- und Auslaßstutzen, mit einer Aufnahme für einen Ventilsitz und mit einem seitlichen Ansatz, aus einem in den seitlichen Ansatz abgedichtet eingesetzten, auswechselbaren Einsatz, der ein einheitliches Bauteil mit einem Ventilsitz, mit einem in einer zu dem Ventilsitz ausgerichteten Führung abdichtend geführten Ventilkörper, mit einer Membran, die an dem dem Ventilsitz abgewandten Ende mit dem Ventilkörper verbunden ist, mit einer über die Membran hinausragenden Verlängerung des Ventilkörpers und mit dem Ventilkörper und dem Ventilsitz zugeordneten Sieben bildet, aus einem in den seitlichen Ansatz eingeschraubten Federgehäuse mit einer zu der Verlängerung ausgerichteten und in einem den Regulierhub bestimmenden Abstand davon endenden Gewindespindel, mit einer am freien Ende des Federgehäuses und der Gewindespindel lösbar befestigten Abdeckkappe und mit einem längs der Gewindespindel verschiebbaren ersten Federteller, und aus einer zwischen dem ersten Federteller und der Membran wirksamen Spannfeder, dadurch gekennzeichnet, daß zwischen der Membran (22) und der Spannfeder (39) ein die Verlängerung (32) und die Gewindespindel (7) lösbar verbindender zweiter Federteller (38) angeordnet ist.

2. Druckmindererventil nach Anspruch 1, dadurch gekennzeichnet, daß der zweite Federteller (38) einen rohrförmigen Axialteil (41) aufweist, der den Abstand zwischen der Verlängerung (32) und der Gewindespindel (7) überbrückt und zwischen Anschlägen am Innenende der Gewindespindel (7) geführt ist, deren Abstand durch den Regulierhub bestimmt ist.

3. Druckmindererventil nach Anspruch 2, dadurch gekennzeichnet, daß die Anschläge von einem Sicherungsring (37) an dem der Membran (22) zugekehrten Ende der Gewindespindel (7) und vom Ende des Gewindeteiles an der Gewindespindel (7) gebildet sind.

4. Druckmindererventil nach einem der vorstehenden Ansprüche, dadurch gekennzeichnet, daß die Verlängerung (32) einen mit einer Hinterschneidung (34) versehenen Fortsatz (33) und die Gewindespindel (7) an der dem Fortsatz (33) zugekehrten Stirnseite eine an den Fortsatz (33) angepaßte und durch den Regulierhub bestimmte Ausnehmung (36) aufweist und daß der zweite Federteller (38) durch eine den Axialteil (41) durchsetzende und an dem Fortsatz (33) angreifende Federklammer (42) lösbar an dem Fortsatz (33) gehalten ist.

Fig. 1

Fig. 2

0075127